# EUROPÄISCHE PATENTSCHRIFT

(11) **EP 2 351 182 B1**
(45) Veröffentlichungstag und Bekanntmachung des Hinweises auf die Patenterteilung: **27.06.2012**
(21) Anmeldenummer: 09782380.1
(22) Anmeldetag: 31.08.2009
(51) Int. Cl.: H02J 7/00, H04M 1/725, H04M 1/73

(54) **ENERGIEVERBRAUCHSAUSGABEVORRICHTUNG UND VERFAHREN ZUR AUSGABE EINER NOCH VERBLEIBENDEN NUTZUNGSMÖGLICHKEIT**
ENERGY USAGE OUTPUT DEVICE AND METHOD FOR OUTPUTTING A REMAINING USABILITY
DISPOSITIF D'AFFICHAGE DE LA CONSOMMATION D'ÉNERGIE ET PROCÉDÉ D'AFFICHAGE D'UNE POSSIBILITÉ D'UTILISATION RESTANTE

(30) Priorität: 28.10.2008 DE 102008043212
(43) Veröffentlichungstag der Anmeldung: 03.08.2011
(73) Patentinhaber: Robert Bosch GmbH, 70442 Stuttgart (DE)
(72) Erfinder: GLAUNING, Rainer, 72631 Aichtal-Groetzingen (DE)
(86) Internationale Anmeldenummer: PCT/EP2009/061189
(87) Internationale Veröffentlichungsnummer: WO 2010/049190

(56) Entgegenhaltungen:
- WO-A1-98/10610
- US-A1- 2007 188 144
- US-B1- 6 313 832
- US-B1- 6 463 305

## Beschreibung

### Technisches Gebiet

Die vorliegende Erfindung betrifft Vorrichtungen und Verfahren, mit denen die noch verbleibende Restnutzungsmöglichkeit eines elektrischen Verbrauchers in einfacher Weise von einem Benutzer abschätzbar oder vorgebbar ist.

### Stand der Technik

Heutige mit Energiespeichern (wie z.B. Batterien, Akkumulatoren und dergleichen) betriebene Geräte, wie z.B. Taschenlampen, stellen immer einen Kompromiss zwischen den (Nutzer-) Zielen maximaler Leistungsabgabe, z.B. Helligkeit, und möglichst langer Betriebszeit, z.B. Leuchtzeit, dar. In der Regel wird z.B. bei Taschenlampen diesen Zielen durch Auswahl eines geeigneten Leuchtkörpers mit geringem Verbrauch (z.B. Leucht-LED, etc.) und eines geeigneten Akkumulators mit möglichst großer Kapazität Rechnung getragen.

Grenzen werden jedoch durch die nicht weniger wichtigen Ziele wie Kosten, Gewicht etc. gesetzt. Das hat zur Folge, dass bei obigem Beispiel bereits bei der Konzeption der Taschenlampe eine Vor-Festlegung auf entweder maximale Leuchtleistung oder maximale Leuchtzeit gemacht werden muss. Das Design ist somit sehr unflexibel angesichts verschiedener möglicher Einsatzgebiete des Nutzers. Der Nutzer kann nur durch Kauf eines weiteren Energiespeichers nachträglich die Leuchtzeit verlängern. Nicht jede Tätigkeit, bei der die Lampe benutzt werden soll, erfordert jedoch die volle Leuchtleistung und auch nicht jede Tätigkeit erfordert maximale Leuchtzeit.

Analoge Probleme der unflexiblen Auslegung sind auch bei anderen mit einem Energiespeicher betriebenen Geräten wie beispielsweise Akkuwerkzeugen, Akkugartengeräten, Elektrofahrzeugen und dergleichen zu beobachten. US 6463305 offenbart ein Energiemanagementsystem für ein Mobiltelefon, wobei der Ladezustand der Batterie ausgelesen wird. Auf dieser Basis wird die verfügbare Sprechzeit bestimmt und ermittelt. WO 9810610 offenbart eine Vorrichtung zum Stevern des Betriebs des elektrischen Verbrauchers basierend auf den Ladezustand der Batterie.

Es ist daher die Aufgabe der vorliegenden Erfindung, eine Möglichkeit zu schaffen, die es einem Anwender eines elektrischen Gerätes erlaubt, die Einsatzmöglichkeit dieser Elektrogeräte deutlich zu erweitern und diese Geräte damit flexibler einsetzbar zu machen.

### Offenbarung der Erfindung

Diese Aufgabe wird durch eine Energieverbrauchsausgabevorrichtung mit den Merkmalen des Anspruchs 1, der Leistungsvorgabevorrichtung, das Verfahren zur Ausgabe der noch verbleibenden Nutzungsmöglichkeit eines Verbrauchers und des Verfahren zum Einstellen einer Restnutzungsmöglichkeit eines Verbrauchers gemäß den nebengeordneten Ansprüchen gelöst.

Weitere Ausführungsformen der Erfindung ergeben sich aus den abhängigen Patentansprüchen.

Die vorliegende Erfindung schafft eine Energieverbrauchsausgabevorrichtung zur Ausgabe der noch verbleibenden Nutzungsmöglichkeit eines an einen Energiespeicher anschließbaren elektrischen Verbrauchers, wobei die Energieverbrauchsausgabevorrichtung folgende Merkmale aufweist:
- eine Einheit zum Bereitstellen einer Restkapazität des elektrischen Energiespeichers;
- eine Leistungsverbrauch-Ermittlungseinheit, die ausgebildet ist, um in einem aktuellen Betriebsmodus des elektrischen Verbrauchers einen Verbrauch von Leistung des elektrischen Verbrauchers während eines Arbeitszyklus, während einer Zeiteinheit oder für einen gegebenen Streckenabschnitt zu ermitteln; und
- eine Ausgabeeinheit, die ausgebildet ist, um unter Verwendung der bereitgestellten Restkapazität und des ermittelten Verbrauchs von Leistung einem Benutzer der Energieverbrauchsausgabevorrichtung bezüglich des aktuellen Betriebsmodus eine Information über die mit dem Energiespeicher maximal noch auszuführenden Arbeitszyklen, über eine maximale Betriebszeit oder über eine maximale Reichweite zu bestimmen und diese Information auszugeben.

Ferner schafft die Erfindung ein Verfahren zur Ausgabe der noch verbleibenden Nutzungsmöglichkeit eines an einen Energiespeicher anschließbaren elektrischen Verbrauchers, wobei das Verfahren die folgenden Schritte aufweist:
- Ermitteln des Leistungsverbrauchs in einem aktuellen Betriebsmodus des elektrischen Verbrauchers eine Leistungsverbrauchsrate zu ermitteln; und
- Ausgeben einer Information über die maximale Nutzungsmöglichkeit bezüglich des aktuellen Betriebsmodus, wobei die auszugebende Information unter Verwendung der bestimmten Restkapazität und der ermittelten Leistungsverbrauchsrate bestimmt wird.

Die vorliegende Erfindung basiert auf der Erkenntnis, dass durch die Ermittlung der noch verbleibenden maximalen Nutzungsmöglichkeit des elektrischen Energiespeichers bei einem vorgegebenen Betriebsmodus ein Benutzer abschätzen kann, wie lange oder wie oft der elektrische Verbraucher, der beispielsweise ein Elektromotor eines Elektrofahrzeugs oder eines Elektrowerkzeugs oder eine elektrisch betriebene Leuchte ist, noch benutzt werden kann, bevor der elektrische Energiespeicher geleert ist. Diese bestimmte maximale Nutzungsmöglichkeit wird durch eine Ermittlung des (z.B. durchschnittlichen) Leistungsverbrauchs des elektrischen Verbrauchers (Leistungsverbrauchsrate) bei dem derzeit eingestellten Betriebsmodus und einer Extrapolation dieses Leistungsverbrauchs für die Zukunft abgeschätzt. Durch die Kenntnis der momentanen Restkapazität des elektrischen Verbrauchers und den extrapolierten Leistungsverbrauch für die Zukunft kann somit auf einfache Art und Weise bestimmt werden, für wie viele Arbeitszyklen, für wie lange oder (bei einem Elektrofahrzeug) für welche Fahrstrecke (Reichweite) die Energie in dem elektrischen Energiespeicher noch zum Betrieb des elektrischen Verbrauchers ausreicht.

Die vorliegende Erfindung bietet den Vorteil, dass der Benutzer nun nicht mehr selbst (meist nicht präzise genug) abzuschätzen braucht, wie lange er noch elektrische Energie aus dem elektrischen Energiespeicher entnehmen kann, bevor dieser leer ist. Somit kann sich der Benutzer in seinem Verhalten der Verwendung des elektrischen Verbrauchers auf die verbleibende nutzbare Energie in dem Energiespeicher einstellen und evtl. nicht unbedingt erforderliche Aktivierungen des elektrischen Verbrauchers vermeiden. Beispielweise kann in der Nacht ein Rad schnell gewechselt werden, wenn das Licht der Akkulampe nicht mehr lange ausreicht. Somit wird vermieden, dass der Benutzer vor einem schnellen Ausfall des elektrischen Verbrauchers mangels verfügbarer Energie frühzeitig gewarnt wird, da die noch verbleibende Nutungsmöglichkeit kontinuierlich angegeben werden kann.

Gemäß einem weiteren Aspekt ist eine Leistungsvorgabevorrichtung zum Einstellen einer Restnutzungsmöglichkeit eines an einen Energiespeicher anschließbaren elektrischen Verbrauchers vorgesehen, wobei die Leistungsvorgabevorrichtung folgende Merkmale aufweist:
- eine Einheit zum Bereitstellen einer Restkapazität des elektrischen Energiespeichers;
- eine Leistungsverbrauch-Ermittlungseinheit, die ausgebildet ist, um in einem aktuellen Betriebsmodus des elektrischen Verbrauchers eine Leistungsverbrauchsrate zu ermitteln;
- eine Empfangseinheit, die ausgebildet ist, um eine Angabe über eine gewünschte Restnutzungsmöglichkeit zu empfangen , und
- eine Ansteuereinheit, um unter Verwendung der empfangenen Angabe über die gewünschte Restnutzungsmöglichkeit und Leistungsverbrauchsrate des elektrischen Verbrauchers den elektrischen Verbraucher zu betreiben, so dass der Verbraucher mit mindestens der gewünschten Restnutzungsmöglichkeit durch den elektrischen Verbraucher betreibbar ist.

Gemäß einem weiteren Aspekt ist ein Verfahren zum Einstellen einer Restnutzungsmöglichkeit eines an einen Energiespeicher anschließbaren elektrischen Verbrauchers vorgesehen, wobei das Verfahren die folgenden Schritte aufweist:
- Bestimmen einer Restkapazität des elektrischen Energiespeichers;
- Ermitteln eines Leistungsverbrauchs in einem aktuellen Betriebsmodus des elektrischen Verbrauchers, um eine Leistungsverbrauchsrate zu ermitteln; und
- Empfangen einer Angabe über eine gewünschte Restnutzungsmöglichkeit, und
- Betreiben des elektrischen Verbrauchers unter Verwendung der empfangenen Angabe über die gewünschte Restnutzungsmöglichkeit und der Leistungsverbrauchsrate des elektrischen Verbrauchers, so dass der Verbraucher mit mindestens der gewünschten Restnutzungsmöglichkeit betreibbar ist.

Häufig kann der Benutzer zu Beginn seiner Tätigkeit oder dem Betrieb des elektrischen Verbrauchers abschätzen, wie hoch seine Nutzungsanforderung (z.B. in Form von benötigten Arbeitszyklen, benötigter Betriebsdauer und dergleichen) sein wird. Mit Hilfe der Leistungsvorgabevorrichtung kann dann der Benutzer die Restnutzungsmöglichkeit vorgeben, so dass der optimale Betriebsmodus des Verbrauchers anhand des Leistungsverbrauchs bei dem aktuellen Betriebsmodus und der Restkapazität des elektrischen Energiespeichers eingestellt wird. Die Nutzungsanforderung wird dabei in Betriebsdauer, Arbeitszyklen (z.B. Schraubvorgänge bei einem Akku-Schrauber, Umdrehungen eines Motors und dergleichen) bzw. (bei Fahrzeugen) in Reichweite angegeben. Hierdurch kann ein Benutzer den optimalen Betriebsmodus des elektrischen Verbrauchers in einfacher Weise so wählen, dass die zur Verfügung stehende Restkapazität so eingeteilt wird, dass sie für die vorgegebene Nutzungsanforderung gerade noch ausreicht.

In einer weiteren Ausführungsform der vorliegenden Erfindung ist die Leistungsverbrauch-Ermittlungseinheit ausgebildet, um die Leistungsverbrauchsrate des elektrischen Verbrauchers für den aktuellen Betriebsmodus aus einem Speicher abzufragen. Dies ermöglicht, eine im Werk des Herstellers bestimmte Leistungsverbrauchsrate für einen aktuellen Betriebsmodus einzustellen, so dass die Bestimmung des Leistungsverbrauchs nicht mehr durch eine Messung über einen Zeitabschnitt zu erfolgen braucht. Dies bietet den Vorteil einer schnelleren und meist auch genaueren Angabe der maximalen Nutzungsmöglichkeit des elektrischen Verbrauchers mit der restlichen im elektrischen Energiespeicher gespeicherten Energie.

Günstig ist es auch, wenn die Leistungsverbrauch-Ermittlungseinheit ausgebildet ist, um die Leistungsverbrauchsrate des elektrischen Verbrauchers für jeden Betriebsmodus einer Mehrzahl von Betriebsmodi zu ermitteln, wobei in den einzelnen Betriebsmodi eine unterschiedliche Leistung aus dem elektrischen Energiespeicher entnommen wird. Dies ermöglicht, durch ein Umschalten von einem Betriebsmodus mit einem hohen Leistungsverbrauch in einem Betriebsmodus mit einem niedrigen Leistungsverbrauch Energie aus dem elektrischen Energiespeicher zu sparen und so eine längere Nutzungsmöglichkeit des elektrischen Verbrauchers zu sichern. In den verschiedenen Betriebsmodi kann dabei jedoch immer die verbleibende Nutzungsmöglichkeit für den elektrischen Verbraucher bestimmt werden, so dass ein Benutzer der Energieverbrauchsausgabevorrichtung den für den gewünschten Einsatzzweck bzw. die gewünschte Nutzungsdauer optimalen Betriebsmodus einstellen oder auch wechseln kann.

Ferner kann auch die Leistungsverbrauch-Ermittlungseinheit eine Schalteinheit aufweisen, die ausgebildet ist, um eine Umschaltung des elektrischen Verbrauchers zwischen verschiedenen Betriebsmodi durchzuführen. Dies ermöglicht vorteilhaft die manuelle Umschaltung, wenn ein Benutzer beim Betrieb der Energieverbrauchsausgabevorrichtung erkennt, dass er den elektrischen Verbraucher länger oder kürzer nutzen möchte, wobei er testen möchte, ob der elektrische Energiespeicher für die lange oder kürzere Nutzungsdauer noch ausreichend Energie zur Verfügung hat. Ist dies der Fall, kann der Benutzer den elektrischen Verbraucher in den entsprechenden Betriebsmodus schalten und den Betrieb des elektrischen Verbrauchers in dem anderen Betriebsmodus fortführen, wobei die verbleibende Energie in dem elektrischen Energiespeicher optimal ausgenutzt wird.

Zusätzlich oder alternativ kann auch die Leistungsverbrauch-Ermittlungseinheit eine Eingabeeinheit aufweisen, die ausgebildet ist, um durch eine Benutzereingabe eine gewünschte Betriebsdauer, eine gewünschte Anzahl von Arbeitszyklen oder eine gewünschte Fahrstrecke des elektrischen Verbrauchers zu empfangen und unter Verwendung der empfangenen Betriebsdauer, der empfangenen Anzahl von Arbeitszyklen oder der empfangenen Fahrstrecke und einer Kenntnis eines Leistungsverbrauchsverhaltens, des elektrischen Verbrauchers, wie z.B. einer Leistungsverbrauchskennlinie, denjenigen Betriebsmodus des elektrischen Verbrauchers zu ermitteln, in dem die gewünschte Betriebsdauer, die gewünschte Anzahl von Arbeitszyklen oder die gewünschte Fahrstrecke durch den elektrischen Verbraucher ausgeführt werden kann. Dies bietet den Vorteil, dass der Benutzer selbst zu Beginn seiner Tätigkeit oder dem Betrieb des elektrischen Verbrauchers abschätzen kann, wie hoch seine Nutzungsanforderung sein wird, so dass durch die Energieverbrauchsausgabevorrichtung dann der optimale Betriebsmodus aus den Leistungsverbrauchsdaten und der Restkapazität des elektrischen Energiespeichers ermittelt wird. Hierdurch kann ein Benutzer immer den optimalen Betriebsmodus des elektrischen Verbrauchers wählen, für den die im elektrischen Energiespeicher gespeicherte Energie während der gewünschten Nutzung gerade noch ausreicht.

In einer anderen Ausführungsform der vorliegenden Erfindung ist die Einheit zum Bestimmen einer Restkapazität des elektrischen Energiespeichers ausgebildet, um die Restkapazität des elektrischen Energiespeichers durch eine Auswertung einer Spannung an dem elektrischen Energiespeicher und/oder die Auswertung eines Stromes vom elektrischen Energiespeicher, insbesondere durch die Auswertung eines linearen Zusammenhangs zwischen dem Strom und der Spannung zu bestimmen. Insbesondere bei Lithium-lonen-Akkus ist eine solche Bestimmung der Restkapazität sehr einfach möglich, da durch die lineare Auswertungsmöglichkeit ein numerisches oder schaltungstechnisch sehr einfaches Bestimmen der Restkapazität gegeben ist. Bei der Verwendung von anderen Akkus kann eine ähnliche Auswertung der Restkapazität erfolgen, wobei eine entsprechende Akku-Kennlinie für die Restkapazität aus dem Strom-Spannungszusammenhang zu verwenden ist.

Insbesondere kann die Leistungsverbrauchsrate einem Verbrauch von Leistung des elektrischen Verbrauchers während eines Arbeitszyklus, während einer Zeiteinheit oder für einen gegebenen Streckenabschnitt entsprechen. Weiterhin kann die Information über die maximale Nutzungsmöglichkeit mit dem Energiespeicher maximal noch auszuführende Arbeitszyklen, eine maximale Betriebszeit oder eine maximale Reichweite entsprechen. Insbesondere kann die gewünschte Restnutzungsmöglichkeit einer Betriebsdauer, einer gewünschte Anzahl von Arbeitszyklen oder einer gewünschten Reichweite des elektrischen Verbrauchers entsprechen.

Günstig ist es auch, wenn ein elektrisches Gerät folgende Merkmale aufweist:
- einen elektrischen Energiespeicher zum Bereitstellen von einer maximalen elektrischen Versorgungsenergie für einen elektrischen Verbraucher;
- eine mit dem elektrischen Energiespeicher verbundene Energieverbrauchsausgabevorrichtung, wie sie vorstehend auch in Variationen beschrieben wurde; und
- einen mit der Energieverbrauchsausgabevorrichtung und dem elektrischen Energiespeicher gekoppelten elektrischen Verbraucher.

In einer solchen Ausführungsform der Erfindung können die erfindungsgemäßen Vorteile besonders gut hervortreten, da hier durch den Verbau des elektrischen Energiespeichers als auch des elektrischen Verbrauchers sowohl die entsprechenden Kenngrößen zur Bestimmung der Restkapazität des elektrischen Energiespeichers als auch die Kenngrößen des Leistungsverbrauchs des elektrischen Verbrauchers direkt im Herstellerwerk in der Energieverbrauchsausgabevorrichtung hinterlegt werden können. Somit wird eine möglicherweise fehlerhafte Eingabe dieser Werte durch einen Benutzer der Energieverbrauchsausgabevorrichtung beim Einstellen dieser Vorrichtung auf die konkrete Einsatzsituation vermieden.

Ganz besonders günstig ist es, wenn ein Elektrowerkzeug, Elektrofahrzeug oder Akkumulatorbeleuchtungsgerät das vorstehend beschriebene elektrische Gerät umfasst. Hier zeigen sich die vorstehend genannten Vorteile besonders deutlich, da in diesem Fall der Benutzer des Elektrowerkzeugs, des Elektrofahrzeugs oder des Akkumulatorbeleuchtungsgeräts nicht befürchten muss, kurz vor Beendigung seiner Werkarbeiten, kurz vor Erreichen seines Ziels mit dem Elektrofahrzeug oder kurz vor Beendigung seiner Tätigkeit, für die er Licht aus der Akkulampe benötigt, auf das entsprechende Gerät verzichten zu müssen, da der elektrische Energiespeicher dieses Gerätes keinen Strom mehr liefert. Vielmehr kann der Benutzer rechtzeitig abschätzen, wann er seine Arbeiten beenden muss, da das Gerät dann nicht mehr weiter verfügbar ist.

Auch kann in einer anderen Ausführungsform der Erfindung ein Computerprogramm mit Programmcode zur Durchführung von Schritten des vorstehend beschriebenen Verfahrens vorgesehen sein, wenn das Computerprogramm auf einer Datenverarbeitungsanlage ausgeführt wird. Hierdurch lassen sich insbesondere die Schritte, die auf einer Berechnungsvorschrift basieren, effizient durch eine Datenverarbeitungsanlage ausführen.

### Kurze Beschreibung der Zeichnungen

Die Erfindung wird nachstehend anhand der beigefügten Figuren der Zeichnungen beispielhaft näher erläutert. Es zeigen:
Fig. 1 ein schematisches Blockschaltbild eines ersten Ausführungsbeispiels der vorliegenden Erfindung als Vorrichtung; und
Fig. 2 ein Ablaufdiagramm eines zweiten Ausführungsbeispiels der vorliegenden Erfindung als Verfahren.

Eventuell angegebene Dimensionen und Maße sind nur exemplarisch, so dass die Erfindung nicht auf diese Dimensionen und Maße beschränkt ist. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können.

### Beschreibung von Ausführungsformen

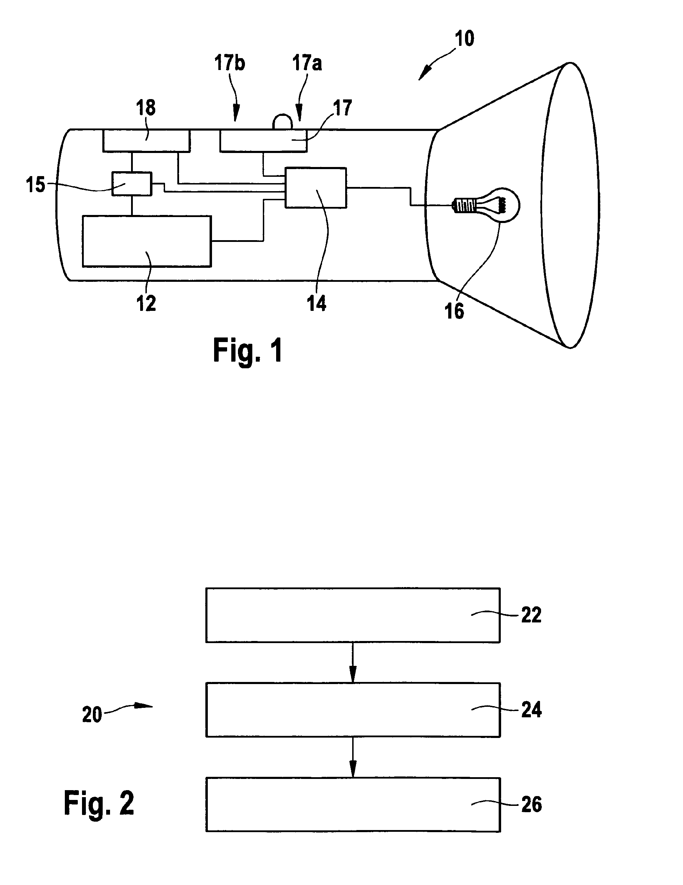

Figur 1 zeigt ein Blockschaltbild eines ersten Ausführungsbeispiels der vorliegenden Erfindung. In Figur 1 ist ein elektrisches Gerät 10 dargestellt, welches einen elektrischen Energiespeicher 12, eine Leistungsverbrauch-Ermittlungseinheit 14 und einen Verbraucher 16 aufweist, welche miteinander verbunden sind. Das elektrische Gerät 10 ist in Figur 1 als Taschenlampe ausgestaltet, jedoch ist die vorliegende Erfindung nicht auf eine solche Ausgestaltung eines elektrischen Gerätes 10 beschränkt.
Der elektrische Energiespeicher 12 kann erschöpflich und/oder wiederaufladbar, etwa in Form eines wiederaufladbaren Akkus, ausgestaltet sein. Das elektrische Gerät 10 umfasst ferner eine Einheit 15, die ausgebildet ist, um die Restkapazität des elektrischen Energiespeichers 12 zu bestimmen und die Restkapazität bzw. eine Information hierüber an die Leistungsverbrauch-Ermittlungseinheit 14 und/oder eine Anzeigeeinheit 18 zu übermitteln. Der Verbraucher 16 besteht in Fig. 1 aus einer Glühbirne. In anderen Ausführungsformen der vorliegenden Erfindung kann das elektrische Gerät als elektrischen Energiespeicher 12 beispielsweise auch eine herkömmliche Batterie und/oder als Verbraucher 16 einen Elektromotor aufweisen.

Die Leistungsverbrauch-Ermittlungseinheit 14 ist gemäß dem ersten Ausführungsbeispiel der vorliegenden Erfindung derart ausgestaltet, dass sie einen Leistungsverbrauch des elektrischen Verbrauchers 16 bestimmen kann. Beispielsweise kann hierzu die vom elektrischen Verbraucher aufgenommene Energie über eine bestimmte Testzeitdauer bei einem aktuellen Betriebsmodus des elektrischen Verbrauchers gemessen werden und hieraus eine Leistungsverbrauchsrate dieses Verbrauchers in dem aktuellen (getesteten) Betriebsmodus bestimmt werden. Alternativ oder zusätzlich kann auch ein Speicher vorgesehen sein, in dem für den aktuellen Betriebsmodus (bzw. mehrere verschiedene Betriebsmodi) des Verbrauchers 16 die entsprechenden Leistungsverbrauchsraten abgelegt ist, so dass die Leistungsverbrauch-Ermittlungseinheit 14 lediglich diesen abgespeicherten Wert auszulesen braucht. Dies erspart die zeitintensive Messung des Leistungsverbrauchs des Verbrauchers 16. Unter Kenntnis der Leistungsverbrauchsrate des elektrischen Verbrauchers 16 und der Restkapazität des elektrischen Energiespeichers 12 kann dann die maximale Nutzungsmöglichkeit abgeschätzt werden, für die der elektrische Energiespeicher 12 noch Energie zur Verfügung stellen kann. Beispielweise kann die maximale Nutzungsmöglichkeit in einer Anzahl von Arbeitszyklen eines Elektrowerkzeugs, einer maximalen Leuchtdauer einer Akkulampe oder einer maximalen Reichweite eines Elektrofahrzeugs mit der Energieverbrauchsausgabevorrichtung angegeben sein. Bestimmt werden kann die maximale Nutzungsmöglichkeit durch Berechnung eines Verhältnisses aus der ermittelten Restkapazität und der bestimmten Leistungsverbrauchsrate des Verbrauchers 16 im betrachteten Betriebsmodus. Diese maximale Nutzungsmöglichkeit kann dann beispielsweise über die Anzeigeeinheit 18 einem Benutzer des elektrischen Geräts 10 angezeigt werden.

Um einem Benutzer des elektrischen Gerätes 10 eine Möglichkeit zu geben, den Leistungsverbrauch des elektrischen Verbrauchers 16 einzustellen (d.h. den elektrischen Verbraucher in verschiedene Betriebsmodi zu schalten), kann über einen Leistungswahlschalter 17 eine Umschaltung auf einen hohen (Position 17a) oder niedrigen (Position 17b) Leistungsverbrauch des Verbrauchers 16 erfolgen. Auch eine Umschaltung zwischen mehreren (speziell mehr als zwei) verschiedenen Leistungsverbrauchsraten ist möglich. Der Leistungswahlschalter 17 ist mit der Leistungsverbrauch-Ermittlungseinheit 14 verbunden, so dass auch für die unterschiedlichen Betriebsmodi die entsprechende Leistungsverbrauchsrate ermittelt werden kann. Auch kann eine stufenlose Umschaltung zwischen verschiedenen (speziell auch mehr als zwei) Leistungsverbrauchsmodi des Verbrauchers 16 möglich sein. Dieses Umschalten der Leistungsverbrauchsraten des elektrischen Verbrauchers 16 ermöglicht dem Benutzer eine Anpassung der Intensität des Betriebs des elektrischen Verbrauchers 16 des elektrischen Gerätes 10 je nachdem welche Tätigkeiten zu verrichten ist. Beispielsweise kann bei einem Reifenwechsel in der Nacht eine große Lichtleistung von einer Akkulampe als elektrischem Gerät 10 gefordert werden, um den Reifenwechsel möglichst schnell durchzuführen (was dann auch eine kurze Leuchtdauer zur Folge hat) oder alternativ braucht bei einer Nachtwanderung keine große Leuchtleistung der gleichen Akkulampe gefordert werden, so dass in diesem Fall eine lange Leuchtdauer möglich ist. Die entsprechende Einstellung kann der Bediener der Akkulampe (als elektrisches Gerät 10) dann über den Leistungswahlschalter 17 vornehmen, wobei dann die verbleibende maximale Leuchtdauer durch die Energieverbrauchsausgabevorrichtung bestimmt und über die Anzeigeeinheit 18 angezeigt werden kann.

In einer weiteren Ausführung kann auch eine (in Fig. 1 nicht dargestellte) Eingabeeinheit vorgesehen sein, über die ein Benutzer eine Anforderung über eine Restnutzmöglichkeit eingeben kann. Diese Anforderung wird dann verwendet, um auf der Basis der Leistungsverbrauchsrate des elektrischen Verbrauchers 16 in den unterschiedlichen Betriebsmodi denjenigen Betriebsmodus zu berechnen/herauszusuchen, bei dem die Nutzungsdauer bzw. -intensität des elektrischen Verbrauchers 16 mindestens der vom Benutzer eingegebenen Anforderung entspricht. Somit wird sichergestellt, dass dem Nutzer mindestens für die Dauer des gewünschten Einsatzszenarios ausreichend Leistung zum Betrieb des elektrischen Verbrauchers 16 zu Verfügung gestellt wird.

Vorstehend wurde die Erfindung exemplarisch am Beispiel einer Akkulampe wiedergeben. Mit dem vorgestellten Ansatz ist es möglich, mit nur einer Leuchte und gegebenem Akkupack (d. h. vorgegebener Kapazität) die Lampe der Arbeitsaufgabe entsprechend der nachstehenden Aspekte flexibler anzupassen:
- eine maximale Leuchtleistung mit Kompromiss bei der Leuchtzeit wird einstellbar (z.B. kurzer Reifenwechsel in der Nacht etc.);
- eine maximale Leuchtzeit mit Kompromiss bei der Leuchtleistung wird einstellbar (z. B. längere Wanderung in der Nacht);
- eine Einstellung auf maximale Leuchtzeit bzw. -leistung kann auch stufenlos oder in mehr als zwei Stufen erfolgen;
- es können Kosteneinsparungen realisiert werden, da durch diese verbesserte Flexibilität gleichzeitig beide Ziele der Leuchtzeit- und der Leuchtleistungsmaximierung erreicht werden können (ansonsten wäre bei gegebener, nicht veränderlicher maximaler Leuchtleistung eine Leuchtzeitsteigerung nur über einen größeren und damit teureren Akku möglich);
- Gewichtsersparnisse werden möglich (kleinerer und damit leichterer Akku);
- eine Baugrößenreduktion wird möglich, da ein kleinerer Akku und ein unterproportional größerer Platzbedarf für eine Elektronik benötigt wird (insbesondere bei Verwendung eines Lithium-Ionen-Akkus, da dieser Akku ohnehin mit einer Ansteuerelektronik betrieben wird)

Implementiert werden kann die Leistungsverbrauch-Ermittlungseinheit 14, beispielsweise in der Form einer "Restlaufzeit-Vorwahl/-Anzeige", in die bei Lithium-lonen-Akku-betriebenen Geräten obligatorische Elektronik. Um den Lithium-lonen-Akku zu schützen, erfassen und verarbeiteten Maschinen-(Steuer-)Elektroniken heute bereits die Größen Akku-Spannung, Strom und Temperatur. Speziell mit den Größen "Akku-Spannung" und "Strom" liegen Informationen vor, um daraus auf den Lithium-Ionen-Akkufüllstand zu schließen und um die aktuelle eingestellte Leistung zu ermitteln. Einzig die Software sollte noch entsprechend ergänzt und ein Display (soweit nicht bereits vorhanden) angebracht werden, um eine automatische Steuerung der optimalen Leuchtzeit bzw. der optimalen Leuchtkraft durch die Leistungsverbrauch-Ermittlungseinheit 14 umzusetzen.

Mit einer solchen Elektronik als Leistungsverbrauch-Ermittlungseinheit wird es (am Beispiel einer Lithium-Ionen-Akkulampe als elektrischem Gerät 10) möglich, die (Rest-) Leuchtzeit (bezogen auf eine gegebene oder gemessenen Akkukapazität und eine vorgegebene bzw. eingestellte (Licht-) Leistung) mittels eines Displays anzuzeigen. Weiterhin kann, bezogen auf eine vorgegebene oder gemessene Akkukapazität und eine gegebene bzw. eingestellte Leuchtzeitvorgabe, die (Licht-) Leistung entsprechend angepasst werden. Da für die Verwendung eines Lithium-Ionen-Akkus als elektrischen Energiespeicher 12 aus Gründen des Schutzes des Akkus ohnehin eine Elektronik verwendet werden sollte, ist auch die Bestimmung der (Rest-) Kapazität mittels dieser Elektronik, beispielsweise über eine Messung der Akkuspannung, einfach realisierbar.

Die vorliegende Erfindung bietet somit einen Ansatz, der es einem Benutzer der Erfindung erlaubt, in Abhängigkeit seiner Arbeitsaufgabe die Betriebszeit (beispielsweise die Leuchtzeit) bzw. die Betriebsleistung (beispielsweise die Lichtleistung) anzuzeigen und individuell anzupassen.

Vorstehend wurde die Erfindung an Hand einer Akkulampe näher erläutert. Es ist jedoch für einen Fachmann offensichtlich, dass die Erfindung auch in beliebigen weiteren elektrischen Geräten umsetzbar ist. Auf diese Weise lassen sich ähnliche Auslegungs-, Kosten- und Anwender-Vorteile auch bei Anwendung der vorliegenden Erfindung in anderen Produkten mit einer in einem vorgegebenen Bereich relativ konstanten (mechanischen, elektrischen, optischen und/oder akustischen) Leistung erzielen. Beispiele für derartige Produkte lassen sich im Bereich der Lampen, Ventilatoren, Radios (-Lautstärke), Pumpen, Rüttler, Schleifer, Grasscheren, Rasenmäher, etc. finden.

Bei Produkten, bei denen eine Leistung in einem weiten Bereich relativ dynamisch einstellbar ist, überwiegen ebenfalls die Vorteile eines Benutzers eines derart ausgestalteten elektrischen Gerätes, da der Benutzer weiß, wie lange er das elektrische Gerät ohne Aufladung des elektrischen Energiespeichers noch benutzen kann, bzw. wie viele Anwendungen gleicher Art er noch ausführen kann. Beispiele für derartige Produkte mit relativ großer dynamischer Leistung lassen sich in dem Bereich der Schrauber, Bohrhammer, Stichsägen, Kreissägen, Fahrzeuge, Schiffe, U-Boote, Flugzeuge, Hubschrauber (Modellbau) etc. finden, um nur einige Beispiele zu nennen. Für den Fall, dass das elektrische Gerät in Bereichen mit sehr dynamischem Leistungsbedarf eingesetzt werden soll, sollte ein entsprechender Extrapolationsalgorithmus implementiert werden, welcher eine Leistungssteuerung des Verbrauchers über die bestehenden (beispielsweise in der Leistungsverbrauch-Ermittlungseinheit fest einprogrammierten) Bereichsgrenzen hinaus ermöglicht.

Die Figur 2 zeigt ein Ablaufdiagramm eines zweiten Ausführungsbeispiels der vorliegenden Erfindung als Verfahren 20 zur Angabe der noch verbleibenden Nutzungsmöglichkeit eines an einen Energiespeicher anschließbaren elektrischen Verbrauchers. Das Verfahren 20 umfasst einen ersten Schritt des Bestimmens 22 einer Restkapazität des elektrischen Energiespeichers 12 sowie einen zweiten Schritt des Ermittelns 24 der Leistungsverbrauchsrate in einem aktuellen Betriebsmodus des elektrischen Verbrauchers 16, um einen Leistungsverbrauch des elektrischen Verbrauchers 16 während eines Arbeitszyklus (z.B. Bohrungen, einen Sägevorgang und dergleichen), während einer Zeiteinheit oder für einen gegebenen Streckenabschnitt (bei Fahrzeugen) zu ermitteln. Der erste 22 und zweite 24 Schritt können dabei auch parallel ausgeführt werden. In einem dritten Schritt erfolgt ein Ausgeben 26 einer Information über die mit dem Energiespeicher 12 maximal noch auszuführenden Arbeitszyklen, über eine maximale Betriebszeit oder über eine maximale Reichweite bezüglich des aktuellen Betriebsmodus, wobei die anzugebende Information unter Verwendung der bestimmten Restkapazität und der ermittelten Leistungsverbrauchsrate bestimmt wird.

## Patentansprüche

1. Energieverbrauchsausgabevorrichtung zur Ausgabe der noch verbleibenden Nutzungsmöglichkeit eines an einen Energiespeicher (12) anschließbaren elektrischen Verbrauchers (16), wobei die Energieverbrauchsausgabevorrichtung folgende Merkmale aufweist:
- eine Einheit (15) zum Bereitstellen einer Restkapazität des elektrischen Energiespeichers (12);
- eine Leistungsverbrauch-Ermittlungseinheit (14), die ausgebildet ist, um in einem aktuellen Betriebsmodus des elektrischen Verbrauchers (16) eine Leistungsverbrauchsrate zu ermitteln; und
- eine Ausgabeeinheit (18), die ausgebildet ist, um unter Verwendung der bereitgestellten Restkapazität und der ermittelten Leistungsverbrauchsrate einem Benutzer der Energieverbrauchsausgabevorrichtung bezüglich des aktuellen Betriebsmodus eine Information über die maximale Nutzungsmöglichkeit zu bestimmen und diese Information auszugeben.

2. Leistungsvorgabevorrichtung zum Einstellen einer Restnutzungsmöglichkeit eines an einen Energiespeicher (12) anschließbaren elektrischen Verbrauchers (16), wobei die Leistungsvorgabevorrichtung folgende Merkmale aufweist:
- eine Einheit (15) zum Bereitstellen einer Restkapazität des elektrischen Energiespeichers (12);
- eine Leistungsverbrauch-Ermittlungseinheit (14), die ausgebildet ist, um in einem aktuellen Betriebsmodus des elektrischen Verbrauchers (16) eine Leistungsverbrauchsrate zu ermitteln;
- eine Empfangseinheit, die ausgebildet ist, um eine Angabe über eine gewünschte Restnutzungsmöglichkeit zu empfangen , und
- eine Ansteuereinheit, um unter Verwendung der empfangenen Angabe über die gewünschte Restnutzungsmöglichkeit und Leistungsverbrauchsrate des elektrischen Verbrauchers (16) den elektrischen Verbraucher (16) zu betreiben, so dass der Verbraucher mit mindestens der gewünschten Restnutzungsmöglichkeit durch den elektrischen Verbraucher (16) betreibbar ist.

3. Vorrichtung gemäß Anspruch 1 oder 2, **dadurch gekennzeichnet, dass** die Leistungsverbrauch-Ermittlungseinheit (14) ausgebildet ist, um die Leistungsverbrauchsrate des elektrischen Verbrauchers (16) für den aktuellen Betriebsmodus aus einem Speicher abzufragen.

4. Vorrichtung gemäß einem der Ansprüche 1 bis 3, **dadurch gekennzeichnet, dass** die Leistungsverbrauch-Ermittlungseinheit (14) ausgebildet ist, um die Leistungsverbrauchsrate des elektrischen Verbrauchers (16) für jeden Betriebsmodus einer Mehrzahl von Betriebsmodi zu ermitteln, wobei in den einzelnen Betriebsmodi eine unterschiedliche Leistung aus dem elektrischen Energiespeicher entnommen wird.

5. Vorrichtung gemäß einem der Ansprüche 1 bis 4, **dadurch gekennzeichnet, dass** die Leistungsverbrauch-Ermittlungseinheit (14) ferner eine Schalteinheit (17) aufweist, die ausgebildet ist, um eine Umschaltung des elektrischen Verbrauchers (16) zwischen verschiedenen Betriebsmodi durchzuführen.

6. Vorrichtung gemäß einem der Ansprüche 1 bis 5, **dadurch gekennzeichnet, dass** die Einheit (15) zum Bestimmen einer Restkapazität des elektrischen Energiespeichers (12) ausgebildet ist, um die Restkapazität des elektrischen Energiespeichers (12) durch eine Auswertung einer Spannung an dem elektrischen Energiespeicher (12) und/oder die Auswertung eines Stromes vom elektrischen Energiespeicher (12), insbesondere durch die Auswertung eines linearen Zusammenhangs zwischen dem Strom und der Spannung zu bestimmen.

7. Vorrichtung gemäß einem der Ansprüche 1 bis 6, **dadurch gekennzeichnet, dass** die Leistungsverbrauchsrate einem Verbrauch von Leistung des elektrischen Verbrauchers (16) während eines Arbeitszyklus, während einer Zeiteinheit oder für einen gegebenen Streckenabschnitt entspricht.

8. Vorrichtung gemäß einem der Ansprüche 1 bis 7, **dadurch gekennzeichnet, dass** die Information über die maximale Nutzungsmöglichkeit mit dem Energiespeicher (12) maximal noch auszuführende Arbeitszyklen, eine maximale Betriebszeit oder eine maximale Reichweite entspricht.

9. Vorrichtung gemäß einem der Ansprüche 1 bis 8, **dadurch gekennzeichnet, dass** die gewünschte Restnutzungsmöglichkeit einer Betriebsdauer, einer gewünschte Anzahl von Arbeitszyklen oder einer gewünschten Reichweite des elektrischen Verbrauchers (16) entspricht.

10. Elektrisches Gerät (10) mit folgenden Merkmalen:
- einem elektrischen Energiespeicher (12) zum Bereitstellen von einer maximalen elektrischen Versorgungsenergie für einen elektrischen Verbraucher (16);
- eine mit dem elektrischen Energiespeicher (12) verbundene Vorrichtung gemäß einem der Ansprüche 1 bis 9; und
- einem mit der Vorrichtung und dem elektrischen Energiespeicher (16) gekoppelten elektrischen Verbraucher (16).

11. Elektrowerkzeug, Elektrofahrzeug oder Akkumulatorbeleuchtungsgerät, das ein elektrisches Gerät (10) gemäß Anspruch 10 umfasst.

12. Verfahren (20) zur Ausgabe der noch verbleibenden Nutzungsmöglichkeit eines an einen Energiespeicher (12) anschließbaren elektrischen Verbrauchers (16), wobei das Verfahren die folgenden Schritte aufweist:
a. Bestimmen (22) einer Restkapazität des elektrischen Energiespeichers (12);
- Ermitteln (24) des Leistungsverbrauchs in einem aktuellen Betriebsmodus des elektrischen Verbrauchers (16) eine Leistungsverbrauchsrate zu ermitteln; und
- Ausgeben (26) einer Information über die maximale Nutzungsmöglichkeit bezüglich des aktuellen Betriebsmodus, wobei die auszugebende Information unter Verwendung der bestimmten Restkapazität und der ermittelten Leistungsverbrauchsrate bestimmt wird.

13. Verfahren gemäß Anspruch 12, **dadurch gekennzeichnet, dass** als Information über die maximale Nutzungsmöglichkeit eine gewünschte Betriebsdauer, eine gewünschte Anzahl von Arbeitszyklen oder eine gewünschte Reichweite des elektrischen Verbrauchers (16) vorgegeben wird, wobei der elektrische Verbraucher (16) unter Verwendung der empfangenen Angabe über die Betriebsdauer, über die Anzahl von Arbeitszyklen bzw. über die Reichweite und der Leistungsverbrauchsrate des elektrischen Verbrauchers (16) betrieben wird, so dass der Verbraucher (16) für die angegebene Betriebsdauer, für die angegebene Anzahl von Arbeitszyklen oder für die angegebene Reichweite betreibbar ist.

14. Verfahren (20) zum Einstellen einer Restnutzungsmöglichkeit eines an einen Energiespeicher (12) anschließbaren elektrischen Verbrauchers (16), wobei das Verfahren die folgenden Schritte aufweist:
- Bestimmen (22) einer Restkapazität des elektrischen Energiespeichers (12);
- Ermitteln (24) eines Leistungsverbrauchs in einem aktuellen Betriebsmodus des elektrischen Verbrauchers (16), um eine Leistungsverbrauchsrate zu ermitteln; und
- Empfangen einer Angabe über eine gewünschte Restnutzungsmöglichkeit, und
- Betreiben des elektrischen Verbrauchers (16) unter Verwendung der empfangenen Angabe über die gewünschte Restnutzungsmöglichkeit und der Leistungsverbrauchsrate des elektrischen Verbrauchers (16), so dass der Verbraucher mit mindestens der gewünschten Restnutzungsmöglichkeit betreibbar ist.

15. Computerprogramm mit Programmcode zur Durchführung von Schritten des Verfahrens nach Anspruch 12 oder 14, wenn das Computerprogramm auf einer Datenverarbeitungsanlage ausgeführt wird.

## Claims

1. Energy consumption output device for outputting the still remaining use capability of an electrical consumer (16) which can be connected to an energy accumulator (12), wherein the energy consumption output device has the following features:
- a unit (15) for making available a residual capacity of the electrical energy accumulator (12);
- a power-consumption-determining unit (14) which is designed to determine a power consumption rate in a current operating mode of the electrical consumer (16); and
- an output unit (18) which is designed to determine an information item about the maximum use capability by using the residual capacity which is made available and the determined power consumption rate to a user of the energy consumption output device with respect to the current operating mode, and to output this information.

2. Power-predefining device for setting a possibility of residual use of an electrical consumer (16) which can be connected to an energy accumulator (12), wherein the power-predefining device has the following features:
- a unit (15) for making available a residual capacity of the electrical energy accumulator (12);
- a power-consumption-determining unit (14) which is designed to determine a power consumption rate in a current operating mode of the electrical consumer (16);
- a receiver unit which is designed to receive an indication about a desired possibility of residual of use, and
- an actuation unit in order to operate the electrical consumer (16) by using the received indication about the desired possibility of residual use and power consumption rate of the electrical consumer (16), with the result that the consumer can be operated with at least the desired possibility of residual use by the electrical consumer (16).

3. Device according to Claim 1 or 2, **characterized in that** the power-consumption-determining unit (14) is designed to interrogate the power consumption rate of the electrical consumer (16) for the current operating mode from a memory.

4. Device according to one of Claims 1 to 3, **characterized in that** the power-consumption-determining unit (14) is designed to determine the power consumption rate of the electrical consumer (16) for each operating mode of a plurality of operating modes, wherein a different power level is extracted from the electrical energy accumulator in the individual operating modes.

5. Device according to one of Claims 1 to 4, **characterized in that** the power-consumption-determining unit (14) also has a switching unit (17) which is designed to carry out switching of the electrical consumer (16) between various operating modes.

6. Device according to one of Claims 1 to 5, **characterized in that** the unit (15) is designed to determine a residual capacity of the electrical energy accumulator (12) in order to determine the residual capacity of the electrical energy accumulator (12) by evaluating a voltage at the electrical energy accumulator (12) and/or evaluating a current of the electrical energy accumulator (12), in particular by evaluating a linear relationship between the current and the voltage.

7. Device according to one of Claims 1 to 6, **characterized in that** the power consumption rate corresponds to a consumption of power by the electrical consumer (16) during a working cycle, during a time unit or for a given section of a route.

8. Device according to one of Claims 1 to 7, **characterized in that** the information about the maximum use capability with the energy accumulator (12) corresponds at maximum to working cycles which can still be carried out, a maximum operating time or a maximum range.

9. Device according to one of Claims 1 to 8, **characterized in that** the desired possibility of residual use corresponds to an operating period, a desired number of working cycles or a desired range of the electrical consumer (16).

10. Electrical device (10) having the following features:
- an electrical energy accumulator (12) for making available a maximum amount of electrical supply energy for an electrical consumer (16);
- a device connected to the electrical energy accumulator (12) according to one of Claims 1 to 9; and
- an electrical consumer (16) coupled to the device and to the electrical energy accumulator (12).

11. Power tool, electric vehicle or accumulator lighting device which comprises an electrical device (10) according to Claim 10.

12. Method (20) for outputting the still remaining use capability of an electrical consumer (16) which can be connected to an energy accumulator (12), wherein the method has the following steps:
a. determining (22) a residual capacity of the electrical energy store (12);
- determining (24) the power consumption in a current operating mode of the electrical consumer (16) in order to determine a power consumption rate; and
- outputting (26) an information item about the maximum use capability with respect to the current operating mode, wherein the information which is to be output is determined using the residual capacity which is determined and the determined power consumption rate.

13. Method according to Claim 12, **characterized in that** a desired operating period, a desired number of working cycles or a desired range of the electrical consumer (16) is predefined as information about the maximum possibility of use, wherein the electrical consumer (16) is operated using the received indication about the operating period, about the number of working cycles or about the range and the power consumption rate of the electrical consumer (16), with the result that the consumer (16) can be operated for the indicated operating period, for the indicated number of working cycles or for the indicated range.

14. Method (20) for setting a possibility of residual use of an electrical consumer (16) which can be connected to an energy accumulator (12), wherein the method has the following steps:
- determining (22) a residual capacity of the electrical energy accumulator (12);
- determining (24) a power consumption level in a current operating mode of the electrical consumer (16) in order to determine a power consumption rate; and
- receiving an indication about a desired possibility of residual use, and
- operating the electrical consumer (16) using the received indication about the desired possibility of residual use and the power consumption rate of the electrical consumer (16), with the result that the consumer can be operated with at least the desired possibility of residual use.

15. Computer program with a program code for carrying out steps of the method according to Claim 12 or 14 when the computer program is run on a data processing system.

## Revendications

1. Dispositif d'affichage de la consommation d'énergie servant à afficher la possibilité d'utilisation restante d'un élément de consommation électrique (16) pouvant être raccordé à un accumulateur d'énergie (12), le dispositif d'affichage de la consommation d'énergie présentant les caractéristiques suivantes :
- une unité (15) de mise à disposition d'une capacité restante de l'accumulateur d'énergie (12) électrique ;
- une unité de calcul de consommation de puissance (14) réalisée pour calculer un taux de consommation de puissance dans un mode de fonctionnement actuel de l'élément de consommation électrique (16) ; et
- une unité d'affichage (18) réalisée pour déterminer, à l'aide de la capacité restante mise à disposition et du taux de consommation de puissance calculé, une information relative à la possibilité d'utilisation maximale pouvant être communiquée à un utilisateur du dispositif d'affichage de la consommation d'énergie par rapport au mode de fonctionnement actuel et pour afficher ladite information.

2. Dispositif d'affichage de performance servant à régler la possibilité d'utilisation restante d'un élément de consommation électrique (16) pouvant être raccordé à un accumulateur d'énergie (12), le dispositif d'affichage de performance présentant les caractéristiques suivantes :
- une unité (15) de mise à disposition d'une capacité restante de l'accumulateur d'énergie (12) électrique ;
- une unité de calcul de consommation de puissance (14) réalisée pour calculer un taux de consommation de puissance dans un mode de fonctionnement actuel de l'élément de consommation électrique (16) ; et
- une unité de réception réalisée pour recevoir une indication sur une possibilité d'utilisation restante souhaitée ; et
- une unité de commande servant à exploiter l'élément de consommation électrique (16) en fonction de l'indication reçue sur la possibilité d'utilisation restante souhaitée et le taux de consommation de puissance de l'élément de consommation électrique (16), de sorte que l'élément de consommation électrique peut être alimenté par l'élément de consommation électrique (16) avec au moins la possibilité d'utilisation restante souhaitée.

3. Dispositif selon la revendication 1 ou 2, **caractérisé en ce que** l'unité de calcul de consommation de puissance (14) est réalisée pour interroger une mémoire sur le taux de consommation de puissance de l'élément de consommation électrique (16) dans le mode de fonctionnement actuel.

4. Dispositif selon l'une quelconque des revendications 1 à 3, **caractérisé en ce que** l'unité de calcul de consommation de puissance (14) est réalisée pour calculer le taux de consommation de puissance de l'élément de consommation électrique (16) pour chaque mode de fonctionnement parmi une pluralité de modes de fonctionnement, une puissance différente étant ôtée à l'accumulateur d'énergie électrique en fonction des différents modes de fonctionnement individuels.

5. Dispositif selon l'une quelconque des revendications 1 à 4, **caractérisé en ce que** l'unité de calcul de consommation de puissance (14) comporte en outre une unité de commutation (17) réalisée pour effectuer un basculement de l'élément de consommation électrique (16) entre différents modes de fonctionnement.

6. Dispositif selon l'une quelconque des revendications 1 à 5, **caractérisé en ce que** l'unité (15) de détermination d'une capacité restante de l'accumulateur d'énergie électrique (12) est réalisée pour déterminer la capacité restante de l'accumulateur d'énergie électrique (12) par le biais d'une analyse d'une tension régnant au niveau de l'accumulateur d'énergie électrique (12) et/ou l'analyse d'un courant provenant de l'accumulateur d'énergie électrique (12), notamment par le biais de l'analyse d'un rapport linéaire entre le courant et la tension.

7. Dispositif selon l'une quelconque des revendications 1 à 6, **caractérisé en ce que** le taux de consommation de puissance correspond à une consommation de puissance de l'élément de consommation électrique (16) pendant un cycle de travail, pendant une unité de temps ou pour un tronçon de ligne donné.

8. Dispositif selon l'une quelconque des revendications 1 à 7, **caractérisé en ce que** l'information concernant la possibilité d'utilisation maximale avec l'accumulateur d'énergie (12) correspond au nombre maximal de cycles de travail pouvant être effectués, au temps de fonctionnement maximal ou à l'autonomie maximale restants.

9. Dispositif selon l'une quelconque des revendications 1 à 8, **caractérisé en ce que** la possibilité d'utilisation restante souhaitée correspond à une durée de fonctionnement, à un nombre souhaité de cycles de travail ou à une autonomie souhaitée de l'élément de consommation électrique (16).

10. Appareil électrique (10) présentant les caractéristiques suivantes :
- un accumulateur d'énergie électrique (12) pour mettre à disposition d'un élément de consommation électrique (16) une énergie d'alimentation électrique maximale ;
- un dispositif selon l'une quelconque des revendications 1 à 9 relié à l'accumulateur d'énergie électrique (12) ; et
- un élément de consommation électrique (16) couplé au dispositif et à l'accumulateur d'énergie électrique (12).

11. Outil électrique, véhicule électrique ou appareil d'éclairage à accumulateur comprenant un appareil électrique (10) selon la revendication 10.

12. Procédé (20) d'affichage de la possibilité d'utilisation restante d'un élément de consommation électrique (16) pouvant être raccordé à un accumulateur d'énergie (12), le procédé comportant les étapes suivantes :
a. détermination (22) d'une capacité restante de l'accumulateur d'énergie électrique (12) ;
- calcul (24) de la consommation de puissance dans un mode de fonctionnement actuel de l'élément de consommation électrique (16) pour calculer un taux de consommation de puissance ; et
- affichage (26) d'une information relative à la possibilité d'utilisation maximale par rapport au mode de fonctionnement actuel, l'information à afficher étant déterminée en fonction de la capacité restante déterminée et du taux de consommation de puissance calculé.

13. Procédé selon la revendication 12, **caractérisé en ce que** l'information relative à la possibilité d'utilisation maximale est prédéterminée sous la forme d'une durée de fonctionnement souhaitée, d'un nombre de cycles de travail souhaité ou d'une autonomie souhaitée de l'élément de consommation électrique (16), l'élément de consommation électrique (16) étant exploité en tenant compte de l'indication reçue sur la durée de fonctionnement, le nombre de cycles de travail et/ou l'autonomie et le taux de consommation de puissance de l'élément de consommation électrique (16), de sorte que l'élément de consommation électrique (16) peut être exploité pendant la durée de fonctionnement indiquée, le nombre de cycles de travail indiqué ou l'autonomie indiquée.

14. Procédé (20) de réglage d'une possibilité d'utilisation restante d'un élément de consommation électrique (16) pouvant être raccordé à un accumulateur d'énergie (12), le procédé comprenant les étapes suivantes :
- détermination (22) d'une capacité restante de l'accumulateur d'énergie électrique (12) ;
- calcul (24) d'une consommation de puissance dans un mode de fonctionnement actuel de l'élément de consommation électrique (16) en vue de calculer un taux de consommation de puissance ; et
- réception d'une indication sur une possibilité d'utilisation restante souhaitée ; et
- exploitation de l'élément de consommation électrique (16) en tenant compte de l'indication reçue sur la possibilité d'utilisation restante souhaitée et le taux de consommation de puissance de l'élément de consommation électrique (16), de sorte que l'élément de consommation électrique peut être exploité de façon à correspondre à une possibilité d'utilisation restante souhaitée au moins.

15. Programme informatique avec code de programmation pour mettre en oeuvre les étapes de procédé selon la revendication 12 ou 14, lorsque le programme informatique est configuré sur une installation de traitement de données.
